# EUROPÄISCHE PATENTSCHRIFT

(11) **EP 3 594 140 B1**
(45) Veröffentlichungstag und Bekanntmachung des Hinweises auf die Patenterteilung: **25.10.2023**
(21) Anmeldenummer: 19177091.6
(22) Anmeldetag: 28.05.2019
(51) Int. Cl.: B65C 3/26, B41J 3/407, B65C 9/06, B65G 47/84, B65C 9/04

(54) **BEHANDLUNGSMASCHINE FÜR BEHÄLTER**
TREATMENT MACHINE FOR CONTAINER
MACHINE DE TRAITEMENT POUR RÉCIPIENTS

(30) Priorität: 10.07.2018 DE 102018211340
(43) Veröffentlichungstag der Anmeldung: 15.01.2020
(73) Patentinhaber: Krones AG, 93073 Neutraubling (DE)
(72) Erfinder: GERTLOWSKI, Georg, 93073 Neutraubling (DE); WEISS, Markus, 93073 Neutraubling (DE)
(74) Vertreter: Grünecker Patent- und Rechtsanwälte PartG mbB

(56) Entgegenhaltungen:
- WO-A1-2017/103813
- CA-A1- 2 531 035
- DE-A1-102010 020 958
- US-A- 4 275 856

## Beschreibung

Die Erfindung betrifft eine Behandlungsmaschine für Behälter
Eine gattungsgemäße Behandlungsmaschine ist aus der WO 2017/103813 A1 bekannt. Derartige Behandlungsmaschinen weisen übereinanderliegende Transportmittel für Drehteller und Zentrierköpfe auf, zwischen denen die Behälter eingespannt werden. Die Transportmittel arbeiten beispielsweise auf der Grundlage von Linearmotorsystemen mit im Bereich von Behandlungsaggregaten geradlinigen Transportabschnitten und haben gegenüber karussellförmigen Behandlungsmaschinen Vorteile hinsichtlich einer flexibleren Anpassung an unterschiedliche Maschinenkapazitäten und Maschinenabmessungen. Bei Linearmotorsystemen kann zudem die Transportgeschwindigkeiten an einzelnen Behandlungsaggregaten variiert werden. Auch müssen nur vergleichsweise geringe Massen beim Transport der Behälter entlang von Behandlungsaggregaten bewegt werden.

Die CA 2 531 035 A1 offenbart eine Behandlungsmaschine für Behälter, umfassend wenigstens ein Behandlungsaggregat, ein rechtes Transportmittel mit daran umlaufenden Drehtellern für Bodenbereiche der Behälter und ein linkes Transportmittel mit daran umlaufenden Zentrierköpfen für Mündungsbereiche der Behälter, wobei die Transportmittel im Bereich des Behandlungsaggregats geradlinig nebeneinander verlaufen, wobei das linke Transportmittel eine umlaufende Förderkette umfasst wobei die Behälter mittels Medienleitungen während des Transports mit Druck beaufschlagt werden.

Die US 4 275 856 A offenbart eine Behandlungsmaschine für Behälter mit oberem und unterem Transportmittel, wobei das obere Transportmittel eine Förderkette mit Zentrierköpfen umfasst, wobei die Behälter über einen statischen Druckverteiler durch die Zentrierköpfe mit Druck beaufschlagt werden, wobei seitliche Transportriemen im Bereich der Behälterbehandlung vorgesehen sind.

Nachteilig bei der Behandlungsmaschine gemäß der WO 2017/103813 A1 ist jedoch, dass für den Behältereinlauf und Behälterauslauf Einlauf- und Auslaufsterne benötigt werden, und dass ein Antrieb von Drehtellern für die zu behandelnden Behälter auf den Transportfahrzeuge des beschriebenen Linearmotorsystems vergleichsweise aufwändig ist und/oder mittels individuell angetriebener Begleitfahrzeuge erfolgt, die zusätzlichen Platz benötigen und somit nur vergleichsweise große Transportabstände zwischen den Behältern zulassen. Dies lässt sich bei vorgegebener Maschinenleistung nur dadurch kompensieren, dass die Behälter mit vergleichsweise schnell an den Behandlungsaggregaten entlanglaufen. Dadurch ergeben sich jedoch anderweitige technische Probleme, beispielsweise hinsichtlich der Behandlungsqualität an den einzelnen Aggregaten.

Zudem wäre es wünschenswert, die Behandlungsmaschine mit geringerem Aufwand an unterschiedliche Behälterformate anpassen und/oder auch bisher ungeeignete Behälterformate behandeln zu können. Ferner wäre ein kompakter und dennoch schonender Behältereinlauf wünschenswert.
die Behälter, ein unteres Transportmittel mit daran umlaufenden Drehtellern für Bodenbereiche der Behälter und ein oberes Transportmittel mit daran umlaufenden Zentrierköpfen für Mündungsbereiche der Behälter, wobei die Transportmittel im Bereich des Behandlungsaggregats geradlinig übereinander verlaufen. Erfindungsgemäß ist das obere Transportmittel als umlaufende obere Förderkette mit einer zentralen Drehdurchführung und daran mitdrehend angeschlossenen Medienleitungen für die Zentrierköpfe ausgebildet.

Dadurch ist es möglich, aktiv greifende und/oder drehende Zentrierköpfe oder dergleichen Positionierungselemente für die Behälter am oberen Transportmittel anzuordnen und die Zentrierköpfe im Bereich des Behandlungsaggregats in durchgehend einheitlicher Transportrichtung zu bewegen, also ohne zwischenzeitliches Zurückfahren der Zentrierköpfe entgegen der Transportrichtung der Behälter. Die Drehdurchführung und die mit ihr mitdrehenden und mit den Zentrierköpfen mitlaufenden Medienleitungen ermöglichen dabei eine ununterbrochene Medienversorgung.

Die Drehdurchführung ist vorzugsweise speziell für die an den Zentrierköpfen benötigten Medien ausgebildet, beispielsweise für elektrischen Strom, Licht, Gase und/oder Flüssigkeiten. Die Medienleitungen dazwischen fungieren als Steuerleitungen, Datenleitungen, Motorleitungen (Antriebsleitungen), Busleitungen und/oder dergleichen für die Zentrierköpfe.

Die Medienleitungen werden vorzugsweise in einer sogenannten Energiekette geführt. Die Energiekette ist an ihrem einen Ende mit dem drehenden Teil der Drehdurchführung verbunden und an ihrem anderen Ende mit der Förderkette, beispielsweise über einen Mitnehmer. Die Medienleitungen verlaufen von dort weiter entlang der Förderkette zu einzelnen Kettengliedern der Förderkette, sodass an den Kettengliedern montierte Antriebe, Sensoren oder dergleichen individuell versorgt werden können, beispielsweise zur individuellen Steuerung.

Die Drehdurchführung ist vorzugsweise zentral an einem Festpunkt zwischen einem unteren Arbeitstrum und einem oberen Rücklauftrum der Förderkette angeordnet und dreht sich der von der Förderkette mitgenommene Energiekette folgend vorzugsweise in Schritten, wie beispielsweise von jeweils 180°.

Vorzugsweise sind an der Förderkette durch die Medienleitungen mit Antriebsenergie und Steuersignalen versorgte Drehantriebe für die Zentrierköpfe befestigt. Die Drehlage einzelner Behälter lässt sich dann mündungsseitig vor der Behandlung einstellen und/oder während der Behandlung gezielt ändern. Aktiv angetriebene Drehteller am unteren Transportmittel sind somit entbehrlich. Da die Drehteller keine Drehmomente übertragen müssen, können sie mit relativ geringerem Aufwand auch so ausgebildet werden, dass sie sich zum Abstützen und/oder Zentrieren unterschiedlicher Behälterformate eignen.

Zudem sind die Behälter vorzugsweise insbesondere im Streckblasenverfahren hergestellte Kunststoffbehälter, die an ihren Mündungsbereichen auch bei unterschiedlichen Behälterformaten meist einheitlich geformt sind und dort eine vergleichsweise gute Maßhaltigkeit aufweisen. Die aktiv angetriebenen Zentrierköpfe eignen sich somit zum Halten und Drehen unterschiedlicher Behälterformate auch ohne aufwändige Umrüstarbeiten.

Vorzugsweise umfassen die Drehantriebe elektrische Linearmotoren mit davon direkt angetriebenen Zahnstangen und mit den Zahnstangen kämmenden Zahnkränzen, die an den Zentrierköpfen in umfänglicher Richtung verlaufen. Die Linearmotoren sind beispielsweise als sogenannte Linearachsen ausgebildet. Diese arbeiten weitgehend spielfrei und ohne Verschleiß. Die Stellbewegung der Linearmotoren verläuft vorzugsweise horizontal und quer zur Transportrichtung. Solche Drehantriebe sind besonders kompakt und ermöglichen daher kurze Transportteilungen.

Bei einer alternativen Ausführungsform umfassen die Drehantriebe mit den Zentrierköpfen drehfest verbundene und diesbezüglich koaxial angeordnete Permanentmagnete sowie wenigstens einen stationären Langstator zur individuellen Drehung der Permanentmagnete. Der Langstator erstreckt sich in Transportrichtung der Behälter und umfasst herkömmliche Elektromagnetspulen zum Erzeugen von Wechselmagnetfeldern. Ferner kann wenigstens ein sich in Transportrichtung erstreckender Permanentmagnet vor oder nach wenigstens einem Langstator zur Drehlagenfixierung der Zentrierköpfe vorhanden sein.

Vorzugsweise weist der Drehantrieb einen Stellbereich von wenigstens 1000° auf. Damit können Drehlagenänderungen für bekannte Etikettierverfahren, zum Anbürsten von Etiketten, für die Inspektion der Behälter oder dergleichen vorteilhaft ausgeführt werden.

Vorzugsweise weist die Förderkette ein nach unten ausgerichtetes Arbeitstrum und ein darüber verlaufendes Rücklauftrum auf. Diese Anordnung ist im Grundriss besonders kompakt und begünstigt einen geradlinigen Einlauf und Auslauf der Behälter. Dies vereinfacht eine Anpassung des Einlaufs und/oder Auslaufs an unterschiedliche Behälterformate.

Vorzugsweise sind die Drehdurchführung und die Medienleitungen zum individuellen Zuführen von Druckluft in die Behälter ausgebildet. Damit können leere und relativ dünnwandige Kunststoffbehälter für die Behandlung formstabilisiert werden.

Vorzugsweise sind die Drehdurchführung und die Medienleitungen zum individuellen Ansaugen der Behälter an den Zentrierköpfen ausgebildet. Damit können leere aber formstabile Kunststoffbehälter für die Behandlung durch Ansaugen an den Zentrierköpfen gehalten und zentriert sowie nach der Behandlung auf einfache Weise wieder von den Zentrierköpfen abgelöst werden.

Vorzugsweise sind die Zentrierköpfe zum hängenden Transport der Behälter und die Drehteller zum Abstützen von unten und/oder Zentrieren der Behälter eingerichtet. Die Zentrierköpfe sind dann beispielsweise als sogenannte Packtulpen für die hängende Handhabung von Behältern ausgebildet. Die Behälter hängen vorzugsweise nur vorübergehend an den Zentrierköpfen, nämlich bis zur Abstützung / Zentrierung der Behälter auf den Drehtellern und beim auslaufseitigen Abheben der Behälter.

Vorzugsweise sind die Drehteller frei drehbar am unteren Transportmittel gelagert. Die Drehteller sind dann lediglich passiv mitdrehend und können somit auf vergleichsweise kompakte und einfache Weise am unteren Transportmittel befestigt werden.

Vorzugsweise umfasst das untere Transportmittel eine umlaufende untere Förderkette, an deren Kettenglieder die Drehteller befestigt sind. Oberes und unteres Transportmittel lassen sich dann vergleichsweise einfach miteinander synchron antreiben.

Denkbar ist aber auch, dass das untere Transportmittel ein Linearmotorsystem mit wenigstens einem Langstator und individuell davon angetriebenen Transportfahrzeugen für die Drehteller umfasst. Vorzugsweise sind mehrere Langstatoren in Form einer Umlaufbahn für die Transportfahrzeuge ausgebildet.

Vorzugsweise umfasst die Behandlungsmaschine ferner einen Einteilstern zur Einteilung einlaufender Behälter auf eine von den Zentrierköpfen vorgegebene Transportteilung durch entsprechend beabstandete Mitnahme der Behälter an ihren Mündungsbereichen.

Der Einteilstern ist dann insbesondere als sogenannter Sägezahnstern ausgebildet, also mit bezüglich der Umlaufrichtung gleichmäßig verteilten, jedoch asymmetrisch geformten Transporttaschen für die Mündungsbereiche der Behälter. Derartige Transporttaschen haben eine vergleichsweise flache vorauslaufende Führungsflanke zum Einleiten der Mündungsbereiche in jeweils eine Transporttasche und eine steilere nachlaufende Mitnehmerflanke zum formschlüssigen Mitnehmen der Mündungsbereiche im Abstand der Transportteilung.

Der Einteilstern eignet sich auch für unterschiedliche Behälterquerschnitte, da die Behälter an ihren in der Regel einheitlichen Mündungsbereichen mitgenommen und eingeteilt werden. Eine gegebenenfalls erforderliche Höhenanpassung der Transporttaschen ist ohne aufwändige Umrüstung des Einteilsterns mittels Hubmechanismus möglich. Zudem ist die Einteilung der Behälter materialschonend im Vergleich zu Einteilschnecken. Vorzugsweise erfolgt die Einteilung somit ohne Einteilschnecke, obwohl dies alternativ prinzipiell möglich wäre.

Vorzugsweise sind die obere Förderkette und die Zentrierköpfe zum Greifen und Anheben aufrecht einlaufender Behälter sowie zum Absetzen und axialen Einspannen der Behälter auf den Drehtellern ausgebildet. Das untere Transportmittel kann dann horizontal fluchtend mit einem herkömmlichen Einlaufband und/oder Auslaufband angeordnet werden.

Erfindungsgemäß umfasst die Behandlungsmaschine ferner eingangsseitig mit der oberen Förderkette in Transportrichtung überlappende Transportriemen zum seitlichen Halten der Behälter. Die Transportriemen sind dann jeweils beidseitig der Behälter angeordnet und halten die Behälter an ihren Seitenwänden so lange, bis die Behälter von den Zentrierköpfen übernommen worden sind. Die Transportriemen können relativ einfach und platzsparend auf einem Höhenniveau zwischen der oberen Förderkette und dem unteren Transportmittel angeordnet werden.

Beispielsweise verlaufen die Transportriemen in der Draufsicht in linearer Fortsetzung der oberen Förderkette. Dadurch ergibt sich eine in der Draufsicht durchgehend lineare Transportbewegung der Behälter vom Behältereinlauf bis zur Behandlung am jeweiligen Behandlungsaggregat und/oder bis zum Behälterauslauf. Dies ermöglicht einen kompakten Maschinengrundriss und eine besonders flexible Behandlung unterschiedlicher Behälterformate.

Vorzugsweise umfasst die Behandlungsmaschine ferner eine mechanische Kurvensteuerung zum Absenken der Zentrierköpfe auf die einlaufenden Behälter und zum Anheben der Zentrierköpfe von den auslaufenden Behältern. Die Kurvensteuerung umfasst dann beispielsweise eine stationär im Bereich des Behältereinlaufs und/oder Behälterauslaufs ausgebildete Steuerkurve und zugehörige, mit den Zentrierköpfen verbundene Steuerrollen.

Anstelle von Zentrierköpfen sind auch andere Behältertransportmittel / Haltemittel, wie beispielsweise Packtulpen, Werkstückträger, Pucks oder dergleichen denkbar.

Vorzugsweise ist die Behandlungsmaschine eine Etikettiermaschine mit wenigstens einem Etikettieraggregat. Etikettieraggregate können in flexibel anpassbarer Anzahl entlang der Transportmittel angeordnet werden, gegebenenfalls auch beiderseits. Die Länge der oberen Förderkette lässt sich je nach Anzahl zu versorgender Zentrierköpfe und der Anzahl nötiger Behandlungsaggregate ebenso flexibel auslegen. Zusätzlich können weitere Behandlungsaggregate, wie beispielsweise Inspektionseinheiten, Bürsteneinheiten zum Anbürsten von Etiketten an den Behältern oder dergleichen an der Förderkette angeordnet werden. Die Behandlungsmaschine könnte auch zum Direktbedrucken der Behälter mittels Tintenstrahl ausgebildet sein und wenigstens ein entsprechendes Direktdruckaggregat umfassen.

Vorzugsweise handelt es sich bei der Behandlungsmaschine um eine Linearausführung. Denkbar wäre allerdings auch eine Rundläufermaschine oder eine nicht homogene Transportstrecke.

Bevorzugte Ausführungsformen der Erfindung sind zeichnerisch dargestellt. Es zeigen:
Figur 1 eine schematische seitliche Ansicht einer bevorzugten Ausführungsform;
Figur 2 eine schematische Draufsicht auf den unteren Teil der Behandlungsmaschine gemäß einer zweiten bevorzugten Ausführungsform; und
Figur 3 eine schematische Darstellung eines alternativen Drehantriebs.

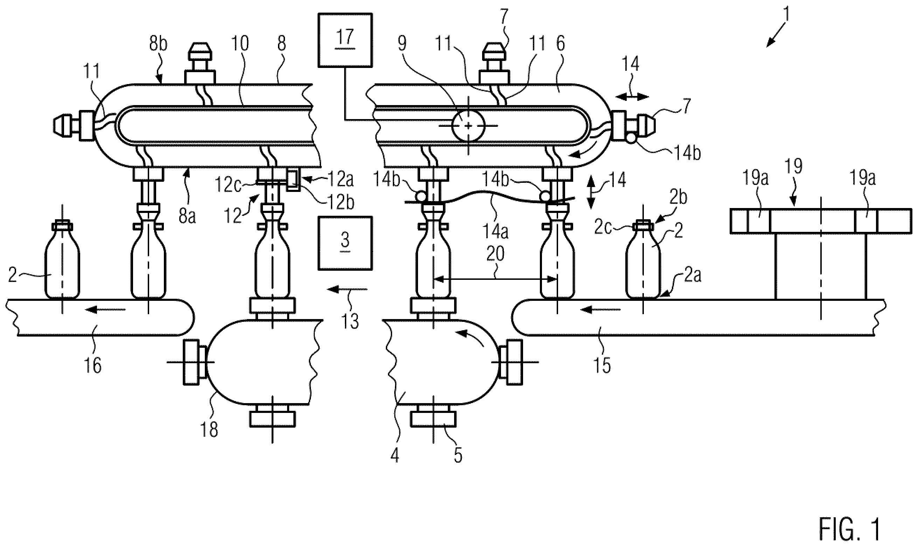

Wie die Figur 1 erkennen lässt, umfasst die Behandlungsmaschine 1 für Behälter 2 wenigstens ein Behandlungsaggregat 3, ein unteres Transportmittel 4 mit daran umlaufenden Drehtellern 5 für Bodenbereiche 2a der Behälter 2 und eine oberes Transportmittel 6 mit daran umlaufenden Zentrierköpfen 7 für Mündungsbereiche 2b der Behälter 2. Die Transportmittel 4, 6 verlaufen im Bereich des Behandlungsaggregats 3 geradlinig übereinander.

Das obere Transportmittel 6 umfasst eine umlaufende obere Förderkette 8, eine daran zentral angeordnete Drehdurchführung 9 und in einer Energiekette 10 geführte Medienleitungen 11, die von der Drehdurchführung 9 zu den einzelnen Zentrierköpfen 7 verlaufen.

Die obere Förderkette 8 umfasst ein nach unten ausgerichtetes Arbeitstrum 8a und ein darüber verlaufendes Rücklauftrum 8b sowie einen (nicht dargestellten) Motor zum kontinuierlichen Antrieb der Förderkette 8.

Die Medienleitungen 11 sind beispielsweise als elektrische Steuerleitungen, elektrische Datenleitungen, elektrische Motorleitungen (zu Versorgung mit Antriebsenergie), optische Datenleitungen, optische Steuerleitungen, pneumatische Leitungen und/oder hydraulische Leitungen ausgebildet. Die Drehdurchführung 9 lässt sich auf prinzipiell bekannte Weise zur Durchführung der im Bereich des oberen Transportmittels 6 benötigten Medien ausbilden.

Die Zentrierköpfe 7 sind an einzelnen Kettengliedern (nicht dargestellt) der Förderkette 8 befestigt. Dies gilt ebenso für den Zentrierköpfen 7 individuell zugeordnete Drehantriebe 12, die vorzugsweise jeweils einen elektrischen Linearmotor 12a, eine davon direkt angetriebene Zahnstange 12b und einen mit der Zahnstange 12b kämmenden und mit dem Zentrierkopf 7 drehfest verbundenen und/oder an diesem ausgebildeten Zahnkranz 12c umfassen.

Der Linearmotor 12a verschiebt die Zahnstange 12b vorzugsweise quer zur (im Bereich des Behandlungsaggregats 3 definierten) Transportrichtung 13. Die Zahnstange 12b dreht dadurch den Zahnkranz 12c und den damit koaxial verbundenen Zentrierkopf 7 um sich selbst. Derartige Drehantriebe 12 lassen sich vergleichsweise platzsparend an der oberen Förderkette 8 befestigen und ermöglicht eine im Wesentlichen spielfreie und verschleißfreie Drehlageneinstellung der einzelnen Behälter 2.

Für die Zentrierköpfe 7 sind (schematisch mittels Doppelpfeil angedeutete) Hubvorrichtungen 14 vorhanden, die entweder als stationäre Hubkurven 14a und mit den Zentrierköpfen 7 mitlaufende Steuerrollen 14b ausgebildet sind oder in Form individuell steuerbarer motorischer Hubantriebe (nicht dargestellt) an den einzelnen Zentrierköpfen 7.

Die Zentrierköpfe 7 sind vorzugsweise für den hängenden Transport der Behälter 2 ausgebildet im Sinne von sogenannten Packtulpen.

Die Zentrierköpfe 7 können als Sauggreifer ausgebildet sein und beispielsweise mittels wenigstens einer Medienleitung 11 mit einem Unterdruck beaufschlagt werden, um die Mündungsbereiche 2b der Behälter 2 an den Zentrierköpfen 7 anzusaugen.

Ebenso können die Zentrierköpfe 7 prinzipiell bekannte mechanische Halteelemente für die Mündungsbereiche 2b und/oder daran ausgebildete Tragringe 2c umfassen. Die Behälter 2 werden dann formschlüssig gegriffen, angehoben und zentriert gehalten.

Ebenso können Abziehvorrichtungen im Bereich der Zentrierköpfe 7 vorhanden sein, um die Mündungsbereiche 2b auslaufseitig nach erfolgter Behandlung wieder von den Zentrierköpfen 7 abzulösen. Derartige Abziehvorrichtungen sind prinzipiell bekannt und daher weder abgebildet noch näher beschrieben.

Wie die Figur 1 schematisch erkennen lässt, laufen die Behälter 2 vorzugsweise aufrechtstehend auf einem Einlaufband 15 ein und werden nach erfolgter Behandlung vorzugsweise auf einem Auslaufband 16 in wiederum aufrechtstehender Lage abtransportiert.

Die Behälter 2 werden einlaufseitig in aufrechter Lage von den Zentrierköpfen 7 an den Mündungsbereichen 2b (gegebenenfalls auch an ihren Tragringen 2c) gegriffen und vorzugsweise so angehoben, dass sie vorübergehend bodenfrei in den Bereich des unteren Transportmittels 4 gefördert und auf den Drehtellern 5 abgestellt werden.

Zur Einstellung einer Startdrehlage für die nachfolgende Behandlung werden die Behälter 2 dann von den Drehantrieben 12 der Zentrierköpfe 7 um sich selbst gedreht. Die Drehteller 5 drehen sich dabei passiv mit. Die Drehteller 5 sind vorzugsweise frei um sich selbst drehbar am unteren Transportmittel 4 gelagert. Entsprechend können das untere Transportmittel 4 und die Drehteller 5 vergleichsweise kompakt und konstruktiv einfach ausgebildet werden.

Da die Drehteller 5 kein Drehmoment auf die Behälter 2 übertragen müssen, haben sie nur eine positionsstabilisierende und den Bodenbereich 2a der Behälter 2 zentrierende Funktion. Die Drehteller 5 können diese Funktionen gegebenenfalls auch ohne Umrüstarbeiten für unterschiedliche Behälterformate erfüllen, beispielsweise mittels konzentrisch nach außen hin ansteigend angeordneter Zentrierungsstufen für unterschiedliche Bodenquerschnitte.

Die Behälter 2 werden von den Zentrierköpfen 7 sowohl zentriert und axial eingespannt als auch in eine gewünschte Drehlage gebracht. Die Drehlage kann vor und/oder während jeder Behandlung, also für einzelne Behandlungsaggregat 3 separat, verändert werden.

Die Drehantriebe 12 ermöglichen vorzugsweise eine Drehlagenänderung um wenigstens 1000°. Die Behälter 2 könnten dann näherungsweise drei volle Umdrehungen in einer bestimmten Drehrichtung ausführen. Hierfür ist der Stellbereich / Hub der Zahnstange 12b vorzugsweise wenigstens dreimal so lang wie der Umfang des Zahnkranzes 12c.

Dies ermöglicht sowohl eine vollumfängliche Inspektion als auch praktikable Drehlagen für die Ausstattung der Behälter 2 mit Etiketten und/oder Aufdrucken, das Anbürsten angebrachter Etiketten und/oder dergleichen Behandlungsschritte. Vorzugsweise sind die Drehantriebe 12 derart einzeln steuerbar, dass die Behälter 2 zwischen einzelnen Behandlungsschritten auch wieder in eine geeignete Startdrehlage zurückgedreht werden können. Die Behälter 2 können vorzugsweise bei jedem Behandlungsschritt drei volle Umdrehungen um ihre Längsachse ausführen.

Schematisch angedeutet ist ferner eine Steuerung 17 für die Behandlungsmaschine 1, die durch die Drehdurchführung 9 mit den einzelnen Zentrierköpfen 7 verbunden ist. Der Übersichtlichkeit halber nicht dargestellt sind gegebenenfalls vorhandene zentrale Leitungen für einzelne Medien zur Drehdurchführung 9.

Die Medienleitungen 11 können beispielsweise Druckluftleitungen und/oder Absaugleitungen für die einzelnen Zentrierköpfe 7 umfassen. Beispielsweise können leere Behälter 2 aus Kunststoff dann zur Stabilisierung ihrer Seitenwände bei der Behandlung mit einem geeigneten Überdruck beaufschlagt werden. Dies ist bei relativ dünnwandigen und entsprechend nachgiebigen Seitenwänden der Behälter 2 besonders hilfreich.

Die Medienleitungen 11 umfassen vorzugsweise eine an die Steuerung 17 angeschlossene Busleitung, über die die Zentrierköpfe 7 individuell gesteuert werden, um die Behälter 2 vom Einlaufband 15 zu übernehmen, im Bereich des wenigstens einen Behandlungsaggregats 3 auf geeignete Weise zu drehen und/oder nach der Behandlung an den Auslaufband 16 zu übergeben.

Vorzugsweise umfasst das untere Transportmittel 4 eine umlaufende untere Transportkette 18, an deren Kettenglieder (nicht dargestellt) die Drehteller 5 befestigt sind. Die Transportmittel 4, 6 weisen dann jeweils (nicht dargestellte) zentrale Antriebe auf, die sich auf prinzipiell bekannte Weise miteinander synchronisieren lassen.

Aufgrund der passiven Funktion der Drehteller 5 benötigt die untere Transportkette 18 weder eine Drehdurchführung noch mitlaufende Medienleitungen.

Wie die Figur 1 ferner schematisch erkennen lässt, umfasst die Behandlungsmaschine 1 vorzugsweise einen Einteilstern 19 zur Einteilung der einlaufenden Behälter 2 auf eine von den Zentrierköpfen 7 vorgegebene Transportteilung 20 durch entsprechend beabstandete Mitnahme der Behälter 2 an ihren Mündungsbereichen 2b.

Der Einteilstern 19 ist als Sägezahnstern ausgebildet mit bezüglich der Umlaufrichtung gleichmäßig verteilten, jedoch asymmetrisch geformten Transporttaschen 19a für die Mündungsbereiche 2b der Behälter 2. Derartige Transporttaschen 19a haben bekanntermaßen eine vergleichsweise flache vorauslaufende Führungsflanke zum Einleiten der Mündungsbereiche 2b in jeweils eine Transporttasche 19a und eine steilere nachlaufende Mitnehmerflanke zum formschlüssigen Mitnehmen der Mündungsbereiche 2b in der Transportteilung 20.

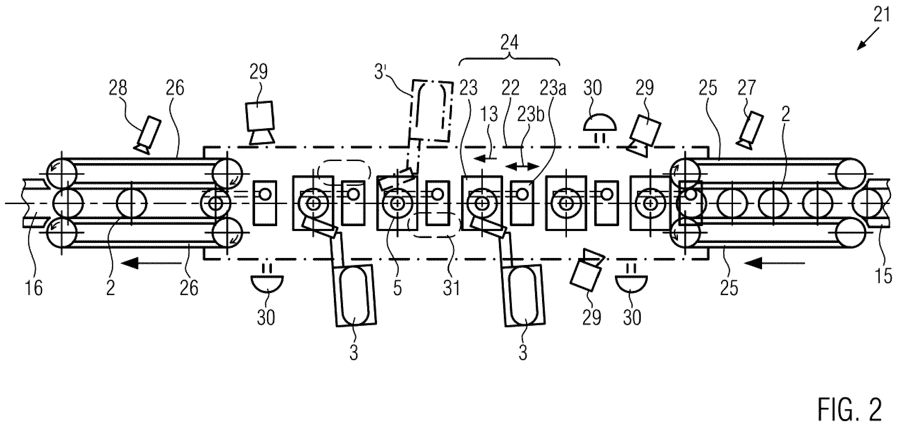

Die übereinander angeordneten Transportmittel 4, 6 ermöglichen eine Maschinenaufstellung als durchgehender Geradläufer. Das heißt, die Transportrichtung 13 ändert sich vom Einlauf der Behälter am Einlaufband 15 bis zum Auslauf der Behälter am Auslaufband 16 nicht (in der Draufsicht entsprechend der Darstellung in der Figur 2).

Die Figur 2 zeigt den unteren Teil der Behandlungsmaschine 21 gemäß einer zweiten Ausführungsform mit wenigstens einem Langstator 22 und davon individuell angetriebenen Transportfahrzeugen 23, die gemeinsam ein unteres Transportmittel 24 in Form eines Linearmotorsystems ausbilden. Die Drehteller 5 sind dann auf je einem Transportfahrzeug 23 insbesondere frei drehend gelagert.

Es wäre aber auch denkbar, an jedes Transportfahrzeug 23 jeweils ein Begleitfahrzeug 23a derart mittels Getriebe zu koppeln, dass eine Abstandsänderung 23b zwischen einander zugeordneten Transportfahrzeugen 23 und Begleitfahrzeugen 23a eine Drehung des jeweiligen Drehtellers 5 bewirkt. Eine solche Kopplung ist prinzipiell bekannt und könnte die Drehantriebe 12 der Zentrierköpfe 7 ergänzen oder gegebenenfalls auch ersetzen.

Die Figur 2 zeigt zudem, dass zwischen dem Einlaufband 15 und dem unterem Transportmittel 24 vorzugsweise Transportriemen 25 zum seitlichen Halten der Behälter 2 vorhanden sind. Zusätzlich können entsprechende Transportriemen 26 zwischen dem unteren Transportmittel 24 und dem Auslaufband 16 vorhanden sein.

Die Transportriemen 25, 26 laufen vorzugsweise mit der gleichen Transportgeschwindigkeit wie das untere Transportmittel 24 und das obere Transportmittel 6. Vorzugsweise überlappen wenigstens die einlaufseitigen Transportriemen 25 in Transportrichtung 13 mit dem oberen Transportmittel 6 (nicht dargestellt). Da die einlaufseitigen Transportriemen 25 beidseitig der Behälter 2 angreifen und diese in aufrechter Lage während des Transports stabilisieren, können die Zentrierköpfe 7 mit vergleichsweise hoher Geschwindigkeit auf die Mündungsbereiche 2b der Behälter 2 gefahren werden, und diese von den einlaufseitigen Transportriemen 25 dennoch zuverlässig übernehmen.

Es ist hierbei selbstverständlich angedacht, die einlaufseitigen Transportriemen 25 und gegebenenfalls auch die auslaufseitigen Transportriemen 26 in entsprechender Funktion bei der Behandlungsmaschine 1 gemäß der ersten Ausführungsform einzusetzen. Die Transportriemen 25, 26 sind ebenso im Anschluss an den jeweiligen Einlaufband 15 und/oder Auslaufband 16 und mit dem oberen Transportmittel 6 in Transportrichtung 13 überlappend angeordnet. Die dadurch bewirkte Stabilisierung der aufrechten Transportlage der Behälter 2 ist unabhängig von der Ausführungsform des unteren Transportmittels 4, 24 einlaufseitig besonders vorteilhaft, optional jedoch auch auslaufseitig einsetzbar.

Schematisch sind in der Figur 2 weitere optionale Aggregate schematisch angedeutet, wie beispielsweise einlaufseitige und auslaufseitige Sensoren 27, 28 zur Behältererkennung, Inspektionskameras 29 mit Beleuchtungseinheiten 30 sowie Bürsteneinheiten 31 zum Anbürsten zuvor an den Behältern 2 angebrachter Etiketten.

Schematisch angedeutet ist in der Figur 2 ferner, dass mehrere Behandlungsaggregate 3 vorzugsweise nur auf einer Seite der Transportmittel 4, 24, 6 angeordnet sind, dass eine optionale beidseitige Anordnung mit wenigstens einem auf der anderen Seite angeordneten Behandlungsaggregat 3' aber ebenso möglich ist.

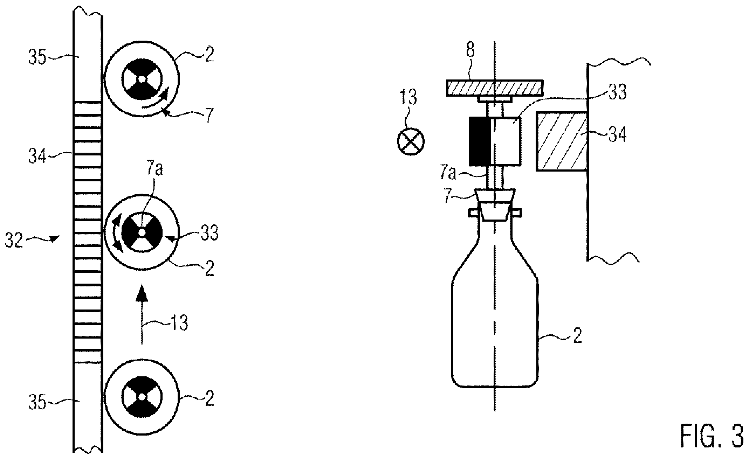

Die Figur 3 verdeutlicht eine alternative Variante eines Drehantriebs 32 für die Zentrierköpfe 7 in der Draufsicht (links) und im Querschnitt (rechts). Demnach sind an den Antriebswellen 7a der Zentrierköpfe 7 Permanentmagnete 33 befestigt, auf die wenigstens ein sich in Transportrichtung 13 erstreckender Langstator 34 auf prinzipiell bekannte Weise mittels elektromagnetischer Wechselfelder einwirkt. Durch mit der Transportbewegung der Zentrierköpfe 7 synchronisiertes Schalten der Wechselfelder werden die Zentrierköpfe 7 bezüglich des oberen Transportmittels 6 individuell gedreht (Doppelpfeil). Die Drehlage der Behälter 2 lässt sich zudem mittels stationärer Permanentmagnete 35 vor und/oder nach dem Langstator 34 während des Transports fixieren.

Die beschriebene Behandlungsmaschine 1, 21 eignet sich in besonderem Maße für die Behandlung von Behältern 2 aus Kunststoff, wie beispielsweise PET-Flaschen, insbesondere von leeren Behältern 2, also vor deren Füllung mit einem Produkt. Derartige Behälter 2 eigenen sich besonders für einen zumindest abschnittsweise hängenden Transport und eine Drehung der Behälter 2 um sich selbst mittels der motorisch angetriebenen Zentrierköpfe 7.

Die einlaufenden Behälter 2 werden vorzugsweise mit Hilfe des Einteilsterns 19 auf eine für die Behandlung geeignete und dem Abstand zwischen benachbarten Drehtellern 5 bzw. Zentrierköpfen 7 entsprechende Transportteilung gebracht. Ein solcher Einteilstern 19 ist prinzipiell bekannt und eignet sich besonders für Behälter 2 aus Kunststoff, da die Seitenwände der Behälter 2 beim Einteilen auf Transportteilung mechanisch kaum belastet werden im Gegensatz zu herkömmlichen Einteilschnecken.

Der Einteilstern 19 eignet sich zudem für unterschiedliche Behälterformate, da die Transporttaschen 19a nicht mit den Seitenwänden der Behälter 2 zusammenwirken, sondern mit deren standardisiertem Mündungsbereich 2b. Zur Formatanpassung ist dann gegebenenfalls lediglich eine Höhenanpassung des Einteilsterns 19 im Bereich seiner Transporttaschen 19a nötig, im Gegensatz zu aufwändigen Umrüstarbeiten für die Führung und Einteilung an unterschiedlichen Behälterquerschnitten.

Dennoch könnte die Behandlungsmaschine 1, 21 anstelle eines Einteilstern 19 prinzipiell auch eine herkömmliche Einteilschnecke (nicht dargestellt) umfassen.

Die beschriebene Behandlungsmaschine 1, 21 ermöglicht aufgrund des oberen Transportmittels 6 mit der umlaufenden Förderkette 8, der zentralen Drehdurchführung 9 und den dazwischen verlaufenden Medienleitungen 11 einen gleichermaßen kompakte wie aktive mündungsseitige Positionierung der Behälter 2 bei geradlinigem Behältereinlauf und Behälterauslauf. Insbesondere ist ein umlaufender Transfer der Behälter 2 zwischen dem oberen Transportmittel 6 und dem Einlauf- beziehungsweise Auslauftransporteuren 15, 16, wie beispielsweise mittels Einlaufstern und Auslaufstern, entbehrlich.

Das obere Transportmittel 6 ist in seiner Länge flexibel skalierbar, so dass eine Vielzahl von Konfigurationen mit unterschiedlicher Anzahl und/oder unterschiedlichen Typen von Behandlungsaggregaten 3, 3' möglich sind, ohne die grundlegenden Komponenten des unteren Transportmittels 4, 24 und/oder des oberen Transportmittels 6 verändern zu müssen. Es ist somit eine vergleichsweise flexible Auslegung und gegebenenfalls auch Anpassung der Behandlungsanlage 1, 21 möglich.

Zudem ermöglicht das beschrieben obere Transportmittel 6 eine flexible Handhabung von Behältern 2 unterschiedlicher Formate, insbesondere in Kombination mit einem Einteilstern 19, da der Transport und die Drehlagenpositionierung der Behälter 2 in dem für unterschiedliche Behälterformate oftmals einheitlichen Mündungsbereich 2b der Behälter 2 erfolgt. Daher sind aufwändige Umrüstarbeiten für Formatwechsel weitgehend entbehrlich.

## Patentansprüche

1. Behandlungsmaschine (1, 21) für Behälter (2), umfassend wenigstens ein Behandlungsaggregat (3, 3'), ein unteres Transportmittel (4, 24) mit daran umlaufenden Drehtellern (5) für Bodenbereiche (2a) der Behälter (2) und ein oberes Transportmittel (6) mit daran umlaufenden Zentrierköpfen (7) für Mündungsbereiche (2b) der Behälter (2), wobei die Transportmittel (4, 24, 6) im Bereich des Behandlungsaggregats (3, 3') geradlinig übereinander verlaufen, wobei das obere Transportmittel (6) eine umlaufende Förderkette (8) mit einer zentralen Drehdurchführung (9) und daran mitdrehend angeschlossenen Medienleitungen (11) für die Zentrierköpfe (7) umfasst und die Behandlungsmaschine einlaufseitig mit der Förderkette (8) in Transportrichtung (13) überlappende Transportriemen (25) zum seitlichen Halten der Behälter (2) umfasst.

2. Behandlungsmaschine nach Anspruch 1, wobei an der Förderkette (8) durch die Medienleitungen (11) mit Antriebsenergie und Steuersignalen versorgte Drehantriebe (12) für die Zentrierköpfe (7) befestigt sind.

3. Behandlungsmaschine nach Anspruch 2, wobei die Drehantriebe (12) elektrische Linearmotoren (12a) mit davon verschiebbaren Zahnstangen (12b) umfassen.

4. Behandlungsmaschine nach Anspruch 1, wobei Drehantriebe (32) mit den Zentrierköpfen (7) drehfest verbundene und koaxial angeordnete Permanentmagneten (33) umfassen sowie wenigstens einen stationären Langstator (34) zur individuellen Drehung der Permanentmagneten (33).

5. Behandlungsmaschine nach wenigstens einem der Ansprüche 2 bis 4, wobei der Drehantrieb (12, 32) einen Stellbereich von wenigstens 1000° aufweist.

6. Behandlungsmaschine nach wenigstens einem der vorigen Ansprüche, wobei die Drehdurchführung (9) und die Medienleitungen (11) zum individuellen Zuführen von Druckluft in die Behälter (2) ausgebildet sind.

7. Behandlungsmaschine nach wenigstens einem der vorigen Ansprüche, wobei die Drehdurchführung (9) und die Medienleitungen (11) zum individuellen Ansaugen der Behälter (2) an den Zentrierköpfen (7) ausgebildet sind.

8. Behandlungsmaschine nach wenigstens einem der vorigen Ansprüche, wobei die Zentrierköpfe (7) zum hängenden Transport der Behälter (2) und die Drehteller (5) zum Abstützen und/oder Zentrieren der Behälter (2) eingerichtet sind.

9. Behandlungsmaschine nach wenigstens einem der vorigen Ansprüche, wobei die Förderkette (8) ein nach unten ausgerichtetes Arbeitstrum (8a) und ein darüber verlaufendes Rücklauftrum (8b) aufweist.

10. Behandlungsmaschine nach wenigstens einem der vorigen Ansprüche, wobei die Drehteller (5) frei drehbar am unteren Transportmittel (4, 24) gelagert sind.

11. Behandlungsmaschine nach wenigstens einem der vorigen Ansprüche, wobei das untere Transportmittel (4, 24) eine umlaufende Förderkette (18) umfasst, an deren Kettenglieder die Drehteller (5) befestigt sind, oder ein Linearmotorsystem mit wenigstens einem Langstator (22) und individuell davon angetriebenen Transportfahrzeugen (23) für die Drehteller (5).

12. Behandlungsmaschine nach wenigstens einem der vorigen Ansprüche, ferner mit einem Einteilstern (19) zur Einteilung einlaufender Behälter (2) auf eine von den Zentrierköpfen (7) vorgegebene Transportteilung (20) durch entsprechend beabstandete Mitnahme der Behälter (2) an ihren Mündungsbereichen (2b).

13. Behandlungsmaschine nach wenigstens einem der vorigen Ansprüche, wobei die Förderkette (8) und die Zentrierköpfe (7) zum Greifen und Anheben aufrechtstehend einlaufender Behälter (2) sowie zum Absetzen und axialen Einspannen der Behälter (2) auf den Drehtellern (5) ausgebildet sind.

14. Behandlungsmaschine nach wenigstens einem der vorigen Ansprüche, wobei das Behandlungsaggregat (3) ein Etikettieraggregat oder Direktdruckaggregat ist.

## Claims

1. A treatment machine (1, 21) for containers (2), comprising at least one treatment unit (3, 3'), a lower transport means (4, 24) with rotary plates (5) which revolve thereon for base regions (2a) of the containers (2), and an upper transport means (6) with centring heads (7) which revolve thereon for mouth regions (2b) of the containers (2), wherein the transport means (4, 24, 6) in the region of the treatment unit (3, 3') run in a rectilinear manner one above another, wherein the upper transport means (6) comprises a revolving conveyor chain (8) with a central rotary union (9) and media lines (11), which are connected thereto to rotate along with it, for the centring heads (7), and the treatment machine comprises on the inlet side transport belts (25) for laterally holding the containers (2), which transport belts overlap with the conveyor chain (8) in the direction of transport (13).

2. A treatment machine according to claim 1, wherein rotary drives (12), which are supplied with drive energy and control signals through the media lines (11), for the centring heads (7) are fastened to the conveyor chain (8).

3. A treatment machine according to claim 2, wherein the rotary drives (12) comprise electric linear motors (12a) with toothed racks (12b) which are displaceable thereby.

4. A treatment machine according to claim 1, wherein rotary drives (32) comprise permanent magnets (33) arranged coaxially and connected non-rotatably to the centring heads (7) and also at least one stationary long stator (34) for individually turning the permanent magnets (33).

5. A treatment machine according to at least one of claims 2 to 4, wherein the rotary drive (12, 32) has a range of control of at least 1000°.

6. A treatment machine according to at least one of the preceding claims, wherein the rotary union (9) and the media lines (11) are configured to supply compressed air individually into the containers (2).

7. A treatment machine according to at least one of the preceding claims, wherein the rotary union (9) and the media lines (11) are configured to individually draw the containers (2) onto the centring heads (7) by suction.

8. A treatment machine according to at least one of the preceding claims, wherein the centring heads (7) are set up for hanging transportation of the containers (2), and the rotary plates (5) are set up to support and/or centre the containers (2).

9. A treatment machine according to at least one of the preceding claims, wherein the conveyor chain (8) has a downwards oriented carrying strand (8a) and a return strand (8b) running above it.

10. A treatment machine according to at least one of the preceding claims, wherein the rotary plates (5) are mounted in a freely rotatable manner on the lower transport means (4, 24).

11. A treatment machine according to at least one of the preceding claims, wherein the lower transport means (4, 24) comprises a revolving conveyor chain (18), to the chain links of which the rotary plates (5) are fastened, or a linear motor system having at least one long stator (22) and, driven individually thereby, transport vehicles (23) for the rotary plates (5).

12. A treatment machine according to at least one of the preceding claims, furthermore with a dividing star wheel (19) for dividing incoming containers (2) into a transport pitch (20) which is specified by the centring heads (7) by entraining, correspondingly spaced apart, the containers (2) at their mouth regions (2b).

13. A treatment machine according to at least one of the preceding claims, wherein the conveyor chain (8) and the centring heads (7) are configured for gripping and lifting containers (2) which enter in an upright position and also for depositing and axially clamping the containers (2) on the rotary plates (5).

14. A treatment machine according to at least one of the preceding claims, wherein the treatment unit (3) is a labelling unit or direct printing unit.

## Revendications

1. Machine de manipulation (1, 21) pour récipients (2), comprenant au moins une unité de manipulation (3, 3'), un moyen de transport inférieur (4, 24) avec des plateaux rotatifs (5) tournant dessus pour les zones de fond (2a) des récipients (2), et un moyen de transport supérieur (6) avec des têtes de centrage (7) tournant dessus pour les zones d'embouchure (2b) des récipients (2), dans laquelle les moyens de transport (4, 24, 6) s'étendent en ligne droite l'un au-dessus de l'autre dans la zone de l'unité de manipulation (3, 3'), dans laquelle le moyen de transport supérieur (6) comprend une chaîne de convoyage tournante (8) avec une transmission rotative centrale (9) et des conduites de fluide (11) pour les têtes de centrage (7) qui lui sont connectées en rotation, et la machine de manipulation comprend du côté entrée des convoyeurs à bande (25) chevauchant la chaîne de convoyage (8) dans la direction de transport (13) pour maintenir latéralement les récipients (2) .

2. Machine de manipulation selon la revendication 1, dans laquelle des entraînements rotatifs (12) pour les têtes de centrage (7) alimentés en énergie d'entraînement et en signaux de commande par les conduites de fluide (11) sont fixés à la chaîne de convoyage (8).

3. Machine de manipulation selon la revendication 2, dans laquelle les entraînements rotatifs (12) comprennent des moteurs linéaires électriques (12a) avec des crémaillères (12b) déplaçables à partir de ceux-ci.

4. Machine de manipulation selon la revendication 1, dans laquelle les entraînements rotatifs (32) avec les têtes de centrage (7) comportent des aimants permanents (33) connectés de manière solidaire en rotation et agencés coaxialement, ainsi qu'au moins un stator long stationnaire (34) pour la rotation individuelle des aimants permanents (33) .

5. Machine de manipulation selon au moins l'une des revendications 2 à 4, dans laquelle l'entraînement rotatif (12, 32) présente une plage de réglage d'au moins 1000°.

6. Machine de manipulation selon au moins l'une des revendications précédentes, dans laquelle la transmission rotative (9) et les conduites de fluide (11) sont conçues pour l'alimentation individuelle en air comprimé dans les récipients (2).

7. Machine de manipulation selon au moins l'une des revendications précédentes, dans laquelle la transmission rotative (9) et les conduites de fluide (11) sont conçues pour aspirer individuellement les récipients (2) sur les têtes de centrage (7).

8. Machine de manipulation selon au moins l'une des revendications précédentes, dans laquelle les têtes de centrage (7) sont agencées pour le transport suspendu des récipients (2) et les plateaux rotatifs (5) sont agencés pour supporter et/ou centrer les récipients (2).

9. Machine de manipulation selon au moins l'une des revendications précédentes, dans laquelle la chaîne de convoyage (8) comporte un brin de travail (8a) dirigé vers le bas et un brin de retour (8b) passant au-dessus du brin de travail.

10. Machine de manipulation selon au moins l'une des revendications précédentes, dans laquelle les plateaux rotatifs (5) sont montés libres en rotation sur le moyen de transport inférieur (4, 24).

11. Machine de manipulation selon au moins l'une des revendications précédentes, dans laquelle le moyen de transport inférieur (4, 24) comprend une chaîne de convoyage tournante (18) sur les maillons de laquelle sont fixés les plateaux rotatifs (5), ou un système de moteur linéaire avec au moins un stator long (22) et des charriots de transport (23) pour les plateaux rotatifs (5) entraînés individuellement par celui-ci.

12. Machine de manipulation selon au moins l'une des revendications précédentes, comportant en outre une roue en étoile de division (19) pour diviser les récipients entrants (2) en une division de transport (20) prédéterminée par les têtes de centrage (7) en saisissant les récipients (2) espacés de manière correspondante par leur zone d'embouchure (2b) .

13. Machine de manipulation selon au moins l'une des revendications précédentes, dans laquelle la chaîne de convoyage (8) et les têtes de centrage (7) sont conçues pour saisir et lever verticalement les récipients entrants (2) et pour déposer et serrer axialement les récipients (2) sur les plateaux rotatifs (5).

14. Machine de manipulation selon au moins l'une des revendications précédentes, dans laquelle l'unité de manipulation (3) est une unité d'étiquetage ou une unité d'impression directe.
